# EUROPEAN PATENT SPECIFICATION

(11) **EP 2 425 482 B1**
(45) Date of publication and mention of the grant of the patent: **23.07.2014**
(21) Application number: 10769255.0
(22) Date of filing: 20.04.2010
(51) Int. Cl.: H01M 2/10

(54) **POWER BATTERY MODULE**
BATTERIEMODUL
MODULE DE BATTERIE D'ALIMENTATION

(30) Priority: 30.04.2009 CN 200920131272 U
(43) Date of publication of application: 07.03.2012
(73) Proprietor: BYD Company Limited, Shenzhen 518118 (CN)
(72) Inventor: ZHU, Jianhua, Guangdong 518118 (CN); ZHENG, Weixin, Guangdong 518118 (CN); ZHOU, Hao, Guangdong 518118 (CN)
(74) Representative: HOFFMANN EITLE
(86) International application number: PCT/CN2010/071927
(87) International publication number: WO 2010/124566

(56) References cited:
- CN-Y- 2 450 785
- CN-Y- 2 679 860
- CN-Y- 201 134 448
- CN-Y- 201 146 200
- CN-Y- 201 160 087
- CN-Y- 201 408 805
- DE-C1- 19 504 687
- JP-A- 60 001 767
- JP-A- 2006 099 997
- JP-A- 2007 165 164
- JP-A- 2009 087 645
- US-A- 5 558 949
- US-A1- 2007 087 266

## Description

### BACKGROUND OF THE INVENTION

### FIELD OF THE INVENTION

The present invention relates to a battery assembly, more particularly to a power battery module, especially for a power vehicle.

### BACKGROUND OF THE RELATED ART

With improvement of the life quality, the requirement on a power vehicle such as a power automobile is increased. Meanwhile, the problem of global environmental pollution and petroleum shortage become worse. The traditional energy such as the petroleum and gas will soon exhaust. In the forgoing background, the HEV/EV (hybrid energy vehicle /electric vehicle) was invented. The power source serving as a main power of the HEV/EV is a lithium ion cell and other new green energy. The green energy helps to ease the problem of the global environmental pollution and the petroleum shortage. However, there are many factors to be considered for designing a battery module, not only to ensure that the performance of the battery module should meet the requirements of the auto, but also to ensure that the battery is safe and reliable. Besides, the match of the power battery module and auto needs to be considered to reduce the volume and the weight of the whole car, which is closely related to the structure of the power battery module.

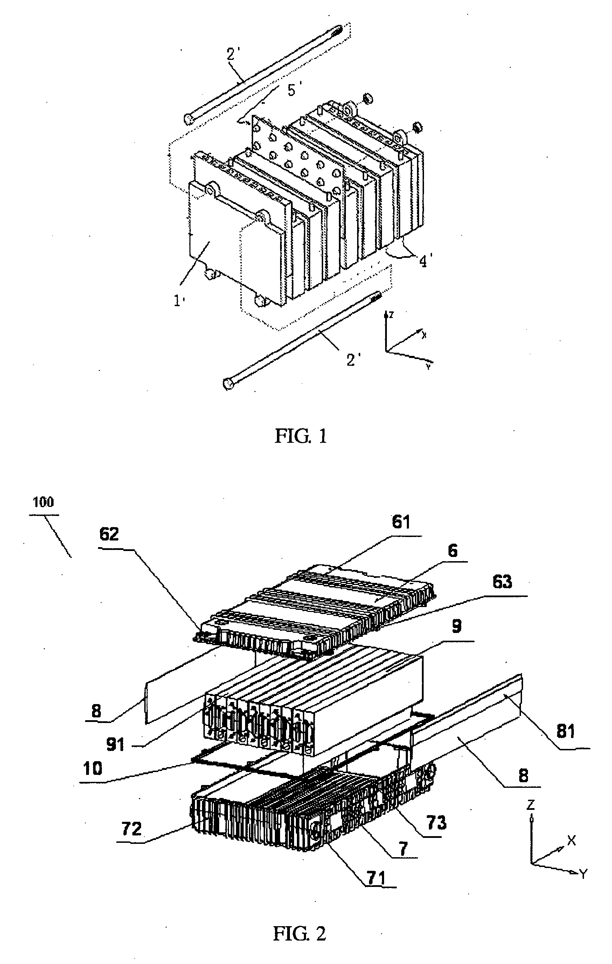

Fig 1 shows a conventional power battery module structure. The power module comprises a plurality of cells 4 connected together. A diaphragm 5' is disposed between the two adjacent cells. The battery module is fastened by a baffle plate 1' and a pull rod 2'. Referring to Fig. 1, the structure for the battery module is firmly secured in X-axis and Z-axis directions as shown in Fig. 1. But in the Y-axis direction, the battery pack is not fixed. The battery module fixed in the auto suffers many shocks from different directions, which will lead the cells become loosened in Y-axis direction. Thus, the battery module can not be secured firmly in prior art, so the reliability and the safety of the battery module is reduced. Further conventional power battery module structure can be found in JP 2009-087645 A, 2007/087266 A1, DE 195 04 687 C1, JP 2006-099997 A, US 5 558 949 A, and JP S60-001767 A.

### SUMMARY OF THE INVENTION

In viewing thereof, the present invention is directed to solve at least one of the problems in the art. Accordingly, a power battery module may need to be provided, which may secure a battery pack in the power battery module firmly in all three dimensions with a simple structure.

According to the invention, a power battery module according to claim 1 is provided.

According to the present invention, the battery pack in the power battery module is firmly secured in three dimensions through the design of the upper case, the lower case and the inner configurations thereof, which improves the reliability of the power battery module and extends the lifespan of the battery pack. In addition, the volume of the vehicle power battery module is reduced and the assembling of the power battery module is simplified, so that the production and maintenance become easier.

### BRIEF DESCRIPTION OF THE DRAWINGS

The foregoing and other features and advantages of the invention will be better understood from the following detailed description of preferred embodiments of this invention when taken conjunction with the accompanying drawings in which:
Figure 1 shows a perspective view of a power battery module in prior art.
Figure 2 shows an exploded perspective view of a power battery module according to an embodiment of the present invention.
Figure 3 shows a cross sectional view of the power battery module according to an embodiment of the present invention along Y-Z plane.
Figure 4 shows a cross sectional view of a power battery module according to an embodiment of the present invention along X-Z plane.
Figure 5 shows a top view of a power battery module according to an embodiment of the present invention.

### DETAILED DESCRIPTION OF THE EMBODIMENTS OF THE INVENTION

The aforementioned features and advantages of the invention as well as additional features and advantages thereof will be more clearly understood hereafter as a result of a detailed description of the following embodiments when taken conjunction with the drawings.

In the following, X-axis, Y-axis and Z-axis directions are used for indicating the direction of the power battery module. However, these expressions are for illustration purpose rather than for limitation. A person skilled in the art can obviously use other terms as height direction, lengthwise direction and lateral direction for description purpose, which are equivalent to X-axis, Y-axis and Z-axis directions respectively.

According to the invention, a power battery module 100 is provided. The power battery module 100 comprises a battery pack 9, an upper case 6, a lower case 7. The battery pack 9 comprises a plurality of cells 91 connected in series or parallel. The lower case 7 is adapted to be mated with the upper case 6 to form a chamber in which the battery pack 9 is located so that the battery pack 9 is securely held in a Z-axis direction of the battery pack 9. At least a baffle plate 8 is longitudinally disposed at a lateral side of the battery pack 9 between the lower case 7 and the upper case 6 to fix the battery pack 9 in a Z-X plane. And at least a boss is formed on at least one of a bottom inner surface of the lower case 7 and a top inner surface of the upper case 6 in a Y-axis direction of the battery pack 9 to fix the battery pack 9 in the Y-axis direction.

In the following, the embodiments of the invention will be described in detail with reference to accompanying figures.

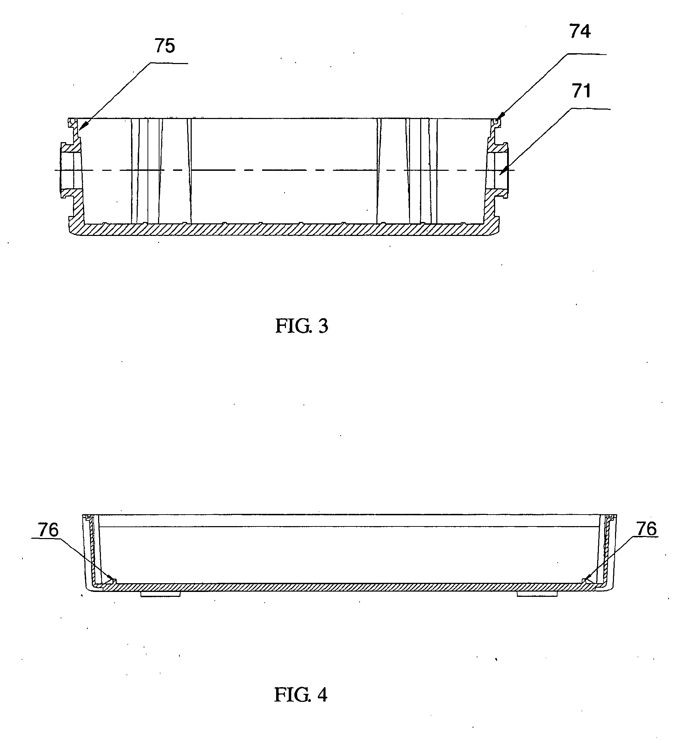

Figure 2 shows an exploded perspective view of a power battery module according to an embodiment of the present invention. In Fig. 2, a pair of baffle plates 8 are longitudinally disposed beside two outmost cells 91 respectively and are interposed between the lower case 7 and the upper case 6. As shown in Fig. 4, a plurality of bosses 76, such as two, may be disposed on the bottom of the lower case 7 which are parallel to the bottom surface of the battery pack 9. However, according to the invention, the bosses 76 may be formed the top inner surface of the upper case 6 which are parallel to the top surface of the battery pack 9. The upper case 6 and the lower case 7 may be configured to securely position the battery pack 9 in the Z-axis direction. The baffle plates 8 are configured to securely position the battery pack 9 in the Y-axis direction, the boss (76) as shown in Fig. 4 may be configured to securely position the battery pack 9 in the X-axis direction.

In some embodiment of the present invention, the boss 76 is disposed on an inner bottom surface of the lower case 7 and parallel to a front surface of the battery pack 9 as shown in Fig. 2, which achieves the position of the battery pack 9 in the X-axis direction. To make the position of the battery pack 9 in the X-axis direction more reliable, the bosses 76 may be preferably disposed on the inner bottom surface of the lower case 7 and the inner top surface of the upper case 6 which are parallel to the front surface of the battery pack 9 as shown in Fig. 2.

According to the present invention, the material of the baffle plate 8 is plastic, which is an insulator with a suitable mechanical strength, heat distortion temperature, low-temperature embrittlement property and a chemical corrosion resistance etc. The baffle plate 8 is formed with a protruding portion 81 on the lateral side of the baffle plate 8, and a mating groove 75 is formed on the lateral side of the lower case 7 to fix the baffle plate 8. Alternatively, the mating groove 75 may be formed on the lateral side of the upper case. The baffle plate 8 is configured to be a plate with a trapezoid cross section with a thickness of approximately 1.5-10mm.

To avoid the contact between the neighboring cells 91, a diaphragm may be interposed between the neighboring cells. The diaphragm is made of insulating plastic material with a mechanical strength, wear resistance, low-temperature embrittlement property and chemical corrosion resistance adapted to the requirement of the battery pack 9.

When the power battery module 100 is damaged, the liquid in power battery module 100 leaks out. Thus, when a power vehicle runs in a water environment, for example, a hybrid car passes by a floating road, the power battery module 100 may still work normally. To avoid liquid leak or ensure the reliability of the power battery module 100, in some embodiment of the present invention, at least one of the upper case 6 and the lower case 7 may further comprise a sealing member which may be disposed on the mating surfaces of the upper case 6 or/and the lower case 7. To improve the sealing effect, at least one of the upper case 6 and the lower case 7 may further comprise a sealing groove 74 formed on one of the upper case 6 or /and the lower case 7. And the sealing member is disposed in the sealing groove 74. The material of the sealing member 10 may be rubber, with proper distortion and chemical corrosion resistance properties.

A pair of electrode outlet 62 are disposed on both side of the lower case 7 which are configured for the connection of the anode and cathode of the cells 91. Further, a gas passing opening may be formed on the lower case 7 for battery temperature modulating.

The upper case 6 may be connected with the lower case 7 in a snap-fit manner. Alternatively, the upper case 6 and the lower case 7 may comprise a plurality of connecting holes, disposed on four sides of the upper case 6 and the lower case 7. The connecting holes on the upper case 6 are corresponding to the connecting holes on the lower case 7. A connecting member, such as a stud bolt, may pass through a connecting hole to connect the upper case 6 with the lower case 7 accordingly. Thus, the battery pack 9 is securely positioned in the Z-axis direction.

The upper case 6 and the lower case 7 may be formed with strengthening ribs on external surfaces thereof. The strengthening ribs enhance the mechanical strength of the power battery module 100 to prevent the power battery module 100 from being damaged in a collision situation. The strengthening ribs may be disposed vertically and horizontally on the external surfaces of the upper case 6 and the lower case 7 respectively according to the suffered stress on the upper case 6 and the lower case 7. The thickness of the upper and lower cases 6, 7 may be about 3-5mm and the thickness of the strengthening ribs may be about 5-12mm. The material of the upper case 6 and the lower case 7 may be plastic with suitable mechanical strength, heat distortion temperature, low temperature embrittlement and chemical corrosion resistance properties. By the plastic baffle plate 8, the upper case 6 and the lower case 7, the weight of the power battery module 100 is reduced and then the weight of the whole power vehicle is reduced accordingly.

In the following, the figures will be described in detail. Figure 2 shows an exploded perspective view of a power battery module 100 according to an embodiment of the present invention. In the Fig. 2, the upper case 6 may comprise a plurality of thread connecting holes 63, disposed at the sides of the upper case 6. The lower case 7 comprises a plurality of thread connecting holes 73, formed on the lower case 7. The thread connecting holes 63 on the upper case 6 are corresponding to the thread connecting holes 73 on the lower case 7. The upper case 6 is connected with the lower case 7 through bolts or screws. And then the battery pack 9 is securely positioned in the Z-axis direction, namely, the battery pack 9 is positioned in the width direction of the battery pack 9.

Referring Figure 3, the lower case 7 further comprises the sealing groove 74, formed on the mating surface of the lower case 7 to accommodate the sealing member 10. In some embodiment of the invention, the upper case 6 also comprises a sealing groove formed on the mating surface of the upper case 6. The sealing member 10 is preferably disposed in the sealing groove 74 to get a better sealing effect, and then the short circuit caused by battery liquid leak due to collision is avoided.

The material of the upper case 6 is polyphenylene oxide. The strengthening ribs 61 are formed on the upper case 6 through integral injection molding, to ensure the strength of the upper case 6. The material of the lower case 7 is the one consisting of polyphenylene oxide and 10% glass fiber. The strengthening ribs 72 are formed on the lower case 7 to ensure the strength of the lower case 7.

Figure 3 shows a cross sectional view of the power battery module 100 according to an embodiment of the present invention along Y-Z plane. Referring to Figs. 2 and 3, the baffle plates 8 are disposed at the two outmost cell of the battery pack 9 respectively. As shown in Fig. 1, the baffle plate 8 comprises the protruding portion 81. The low case comprises the mating groove 75. The baffle plate 8 is fitted in the lower case 7 and then the battery pack 9 is clamped by the baffle plates 8 accordingly. Thus, the battery pack 9 is positioned in the Y-axis direction, namely, the battery pack 9 is positioned in the thickness direction of the battery pack 9. In some embodiment of the invention, the upper case 6 also comprises a mating groove 75. The baffle plate 8 is fitted in the lower case 7 and the upper case 6 respectively.

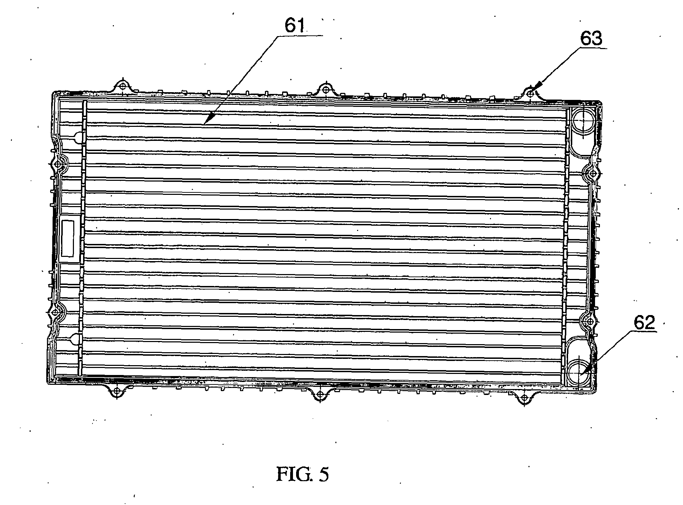

As shown in Fig. 5, the lower case 7 further comprises a pair of electrode outlet 62 disposed on the right side of the lower case 7 which are configured for the connection of the anode and cathode of the cell. As shown in Fig. 3, the gas passing opening 71 for modulating the temperature of the battery pack 9 is formed on the right wall of the lower case 7.

Figure 4 shows a cross sectional view of a power battery module 100 according to an embodiment of the present invention along X-Z plane. As shown in Fig. 4, two bosses 76 are formed on the inner bottom surface of the lower case 7 and the bosses 76 are parallel to an edge (not shown in Fig. 4) of the battery pack 9. The battery pack 9 is fixed by the bosses when the battery pack 9 is positioned in the lower case 7. And then the battery pack 9 is securely positioned in the X-axis direction.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A power battery module (100), comprising:
a battery pack (9) comprising a plurality of cells connected in series or parallel;
an upper case (6);
a lower case (7) adapted to be mated with the upper case (6) to form a chamber in which the battery pack (9) is located so that the battery pack (9) is held stably in a height direction of the battery pack (9);
at least a baffle plate (8) longitudinally disposed at a lateral side of the battery pack (9) between the lower case (7) and the upper case (6) to fix the battery pack (9) in a lateral direction,
**characterized in that** a protruding portion (81) is formed on the lateral side of the baffle plate (8), and a mating groove (75) is formed on the lateral side of the upper case (6) and/or the low case (7) to fix the baffle plate (8) so that the battery pack (9) is clamped by the baffle plate (8); wherein the material of the baffle plate (8) is plastic and wherein the baffle plate (8) is configured to be a plate with a trapezoid cross section; and
**in that** the power battery module (100) comprises at least a boss (76) formed on at least one of a bottom inner surface of the lower case (7) and a top inner surface of the upper case (6) in a lengthwise direction of the battery pack (9) to fix the battery pack (9) in the lengthwise direction.

2. The power battery module (100) according to claim 1, wherein the baffle plate (8) has a thickness of about 1.5-10mm.

3. The power battery module (100) according to claim 1, further comprising a sealing member (10) provided between mating surfaces of the upper and lower cases.

4. The power battery module (100) according to claim 1, wherein the upper case (6) and the lower case (7) are formed with corresponding connecting holes (73) so that the upper case (6) and the lower case (7) are fixed by a connecting member penetrating through the connecting holes (73).

5. The power battery (100) module according to claim 1, wherein a pair of the baffle plates (8) are longitudinally disposed at both lateral sides of the battery pack (9).

## Patentansprüche

1. Batteriemodul (100) mit:
einem Batteriepaket (9) mit mehreren Zellen, die in Serie oder parallel verbunden sind;
einem oberen Gehäuse (6);
einem unteren Gehäuse (7), das angepasst ist, mit dem oberen Gehäuse (6) derart verbunden werden zu können, dass diese eine Kammer ausbilden, in der das Batteriepaket (9) derart angeordnet ist, dass das Batteriepaket (9) in einer Höhenrichtung des Batteriepakets (9) stabil gehalten ist;
zumindest einer Zwischenplatte (8), die an einer lateralen Seite des Batteriepakets (9) zwischen dem unteren Gehäuse (7) und dem oberen Gehäuse (6) derart in Längsrichtung angeordnet ist, dass sie das Batteriepaket (9) in einer lateralen Richtung fixiert,
**dadurch gekennzeichnet, dass** ein vorstehender Abschnitt (81) an der lateralen Seite der Zwischenplatte (8) ausgebildet ist, und eine Passnut (75) an der lateralen Seite des oberen Gehäuses (6) und/oder des unteren Gehäuses (7) derart ausgebildet ist, dass die Zwischenplatte (8) derart fixiert ist, dass das Batteriepaket (9) von der Zwischenplatte (8) eingespannt ist; wobei das Material der Zwischenplatte (8) Plastik ist, und wobei die Zwischenplatte (8) derart ausgelegt ist, dass sie eine Platte mit einem trapezförmigen Querschnitt ist; und
dadurch, dass das Batteriemodul (100) zumindest einen Vorsprung (76) aufweist, der auf einer Boden-Innenfläche des unteren Gehäuses (7) und/oder einer oberen Innenfläche des oberen Gehäuses (6) in einer Längsrichtung des Batteriepakets (9) derart ausgebildet ist, dass das Batteriepaket (9) in der Längsrichtung fixiert ist.

2. Batteriemodul (100) nach Anspruch 1, bei dem die Zwischenplatte (8) eine Dicke von ungefähr 1,5 mm bis 10 mm aufweist.

3. Batteriemodul (100) nach Anspruch 1, ferner mit einem Dichtelement (10), das zwischen den Verbindungsflächen der oberen und unteren Gehäuse angeordnet ist.

4. Batteriemodul (100) nach Anspruch 1, bei dem das obere Gehäuse (6) und das untere Gehäuse (7) mit entsprechenden Verbindungslöchern (73) derart ausgebildet sind, dass das obere Gehäuse (6) und das untere Gehäuse (7) durch ein Verbindungselement fixiert sind, das durch die Verbindungslöcher (73) hindurchtritt.

5. Batteriemodul (100) nach Anspruch 1, bei dem zwei der Zwischenplatten (8) an beiden lateralen Seiten des Batteriepakets (9) in Längsrichtung angeordnet sind.

## Revendications

1. Module de batterie d'alimentation (100), comprenant :
un bloc-batterie (9) comprenant une pluralité de cellules reliées en série ou en parallèle ;
un boîtier supérieur (6) ;
un boîtier inférieur (7) adapté pour être conjugué avec le boîtier supérieur (6) pour former une chambre dans laquelle le bloc-batterie (9) est situé de sorte que le bloc-batterie (9) soit maintenu de manière stable dans une direction de hauteur du bloc-batterie (9) ;
au moins une plaque de déviation (8) disposée longitudinalement au niveau d'un côté latéral du bloc-batterie (9) entre le boîtier inférieur (7) et le boîtier supérieur (6) pour fixer le bloc-batterie (9) dans une direction latérale,
**caractérisé en ce qu'**une partie en saillie (81) est formée sur le côté latéral de la plaque de déviation (8), et une rainure conjuguée (75) est formée sur le côté latéral du boîtier supérieur (6) et/ou du boîtier inférieur (7) pour fixer la plaque de déviation (8) de sorte que le bloc-batterie (9) soit serré par la plaque de déviation (8) ; où le matériau de la plaque de déviation (8) est du plastique et où la plaque de déviation (8) est configurée de manière à être une plaque avec une section transversale trapézoïdale ; et
**en ce que** le module de batterie d'alimentation (100) comprend au moins un bossage (76) formé sur au moins l'une d'une surface interne inférieure du boîtier inférieur (7) et d'une surface interne supérieure du boîtier supérieur (6) dans une direction de la longueur du bloc-batterie (9) pour fixer le bloc-batterie (9) dans la direction de la longueur.

2. Module de batterie d'alimentation (100) selon la revendication 1, dans lequel la plaque de déviation (8) a une épaisseur se trouvant dans une plage allant d'environ 1,5 à 10 mm.

3. Module de batterie d'alimentation (100) selon la revendication 1, comprenant en outre un élément d'étanchéité (10) prévu entre des surfaces conjuguées des boîtiers supérieur et inférieur.

4. Module de batterie d'alimentation (100) selon la revendication 1, dans lequel le boîtier supérieur (6) et le boîtier inférieur (7) Sont formés avec des trous de connexion correspondants (73) de sorte que le boîtier supérieur (6) et le boîtier inférieur (7) soient fixés par un élément de connexion pénétrant à travers les trous de connexion (73).

5. Module de batterie d'alimentation (100) selon la revendication 1, dans lequel une paire de plaques de déviation (8) sont disposées longitudinalement au niveau des deux côtés latéraux du bloc-batterie (9).
